# FASCICULE DE BREVET EUROPEEN

(11) **EP 3 642 515 B1**
(45) Date de publication et mention de la délivrance du brevet: **07.04.2021**
(21) Numéro de dépôt: 18723760.7
(22) Date de dépôt: 30.04.2018
(51) Int. Cl.: F16K 1/226, F16K 1/228

(54) **ROBINET À PAPILLON CENTRÉ**
ZENTRISCHE ABSPERRKLAPPE
CENTRIC BUTTERFLY VALVE

(30) Priorité: 20.06.2017 FR 1770655
(43) Date de publication de la demande: 29.04.2020
(73) Titulaire: KSB S.A.S, 92230 Gennevilliers (FR)
(72) Inventeur: ARNAL, Fabien, 33600 Pessac (FR)
(74) Mandataire: Eidelsberg, Olivier Nathan
(86) Numéro de dépôt international: PCT/EP2018/061051
(87) Numéro de publication internationale: WO 2018/233915

(56) Documents cités:
- GB-A- 1 566 456
- US-A- 2 965 354
- US-A- 4 290 615
- US-A- 4 335 748
- US-A1- 2014 203 201

## Description

La présente invention se rapporte aux robinets à papillon. Un robinet à papillon assure l'étanchéité amont/aval dans un circuit. Il se compose d'un corps, solidaire de la tuyauterie, et d'un papillon, tournant sur un axe perpendiculaire au flux permettant le passage ou le blocage de celui-ci. La direction du flux est la direction axiale dans le présent mémoire.

Ces éléments étant rigides, on leur adjoint généralement un joint intermédiaire, plus souple, permettant un bon appairage des surfaces afin de garantir un niveau d'étanchéité suffisant. Il est composé d'une partie assurant l'étanchéité statique, solidaire d'un des éléments, et d'une partie assurant l'étanchéité dynamique, en contact avec le second élément lors de la fermeture du papillon. La partie statique peut être fixée sur le corps ou sur le papillon.

De manière générale, un robinet à papillon possède également deux autres étanchéités pour éviter la fuite du fluide vers l'extérieur du système, à savoir l'étanchéité arbre/corps et l'étanchéité corps/tuyauterie.

Dans un robinet à papillon centré, l'étanchéité est assurée dans le plan médian du papillon en position fermée. Le joint, dans cette position, est tangent à la surface (ou siège) de contact dynamique (du corps ou du papillon, selon la configuration).

Afin d'assurer le niveau d'étanchéité requis, une pression de contact entre le joint et le siège dynamique est nécessaire. Cette pression de contact est assurée par une cote de serrage radial lors de la conception. Cela se traduit par un écrasement du joint souple sur le siège dynamique rigide, la pression de contact étant fonction de l'élasticité du joint.

La conception symétrique de ce type de robinet permet une performance égale dans un sens ou l'autre du flux. On trouvera un exemple de robinet à papillon centré avec joint monté sur le corps dans le brevet US 1 977 351 A.

Le robinet à papillon centré n'est pas autoclave, car l'effort de contact est purement perpendiculaire à l'effort généré par le fluide. Cela signifie que cet effort est entièrement dû au serrage initial du joint. Les inconvénients qui en découlent sont :
- le couple nécessaire à l'actionnement du papillon, car le joint frotte sur le siège dynamique pendant toute la rotation du papillon ;
- l'usure prématurée des surfaces en contact en raison de ce frottement glissant et
- la limite physique des matériaux actuels, ne permettant pas de hauts niveaux de compression des joints sans déchirement de matière, notamment en raison de la cinématique de fermeture du papillon ; cela induit une limitation de la pression de service admissible.

Un autre inconvénient du robinet à papillon centré est que le plan d'étanchéité (plan médian du papillon en position fermée) comprend également l'arbre d'actionnement (axe de rotation). Il est donc nécessaire de faire un système d'étanchéité contournant cet arbre de part et d'autre, ce qui complexifie les pièces.

Au US 2014/203201 A1, on décrit un robinet dans lequel un joint 106 interposé entre un corps 102 et un papillon 104 est serré dans un logement entre une retenue 120 et une surface 118 du corps 102. De la même façon, au US 4 201 239 A, au US 4 335 748 A, au GB 1 566 456 A, au GB 1 006 377 A et au DE 82 33 785 U1, le joint est serré, bloqué, monté à complémentarité de forme ou à contre-dépouille ou incorporé au corps par vulcanisation et empêché de se déplacer tout entier dans un logement.

Le robinet suivant l'invention comprend un corps définissant, par un siège intérieur annulaire, un intérieur formant un passage ayant une direction axiale, un papillon centré, monté tournant dans l'intérieur du corps d'une position ouverte dégageant le passage à une position fermée l'obturant, un joint d'étanchéité disposé dans un logement délimité par le siège et par une face, en regard du siège en la position fermée, du papillon, le siège et la face convergeant dans la direction axiale vers l'intérieur. En la position fermée, le joint est libre de se mouvoir en son entier dans le logement dans toutes les directions.

Comme le joint n'est ainsi lié statiquement ni au corps, ni au papillon du robinet et n'est pas non plus monté serré ou à complémentarité de forme en fonctionnant avec deux zones de contact dynamique, une sur le corps et une sur le papillon, il prend, en la position ouverte, la position qui lui convient le mieux, sans être sollicité, contraint ou précontraint. En la position fermée, il n'est contraint que par le fluide et ne subit ainsi pas de contrainte due à une fixation ou à un serrage et il se place de soi-même en la position qui lui convient le mieux, en sorte qu'il se fatigue aussi peu que possible. La durée de vie du robinet s'en trouve beaucoup augmentée.

Il est prévu, de préférence, un moyen empêchant le joint de sortir du logement par simple déplacement. Pour le sortir, il faut le déformer. Ce moyen peut être un anneau anti-éjection, ce peut être aussi une gorge circonférentielle intérieure du corps.

Suivant un mode de réalisation, une dimension du logement dans la direction axiale est plus grande qu'une dimension du joint dans la direction axiale de 1 à 50% de la dimension du joint dans la direction axiale. Cette dimension plus grande dans la direction axiale est à un endroit du logement plus loin de l'intérieur qu'un autre endroit du logement.

Une dimension du logement dans une direction radiale, perpendiculaire à la direction axiale, peut aussi être plus grande qu'une dimension du joint dans la direction radiale de 1 à 50% de la dimension du joint dans la direction radiale. Cette dimension plus grande dans la direction radiale est à un endroit du logement plus loin de l'intérieur qu'un autre endroit du logement.

De préférence, la convergence, sans intersection, du siège et de la face en regard du siège, du papillon en position fermée, est continue, sans singularité géométrique de type épaulement, arête.

Dans le mode de réalisation le plus simple, le joint est torique. Le joint peut être aussi un joint à lèvres, de préférence énergisé par une âme élastique.

Le joint torique a un diamètre intérieur inférieur au diamètre extérieur maximal du papillon et un diamètre extérieur supérieur au diamètre intérieur minimal du siège du corps.

Suivant une variante, le robinet est équipé de deux joints, de part et d'autre du papillon en la position fermée.

Aux dessins annexés, donnés uniquement à titre d'exemple :
- la figure 1 est une vue en perspective avec arrachement partiel d'un robinet à papillon suivant l'invention ;
- la figure 2 en est une vue partielle en coupe, alors que le robinet est fermé ;
- la figure 3 représente l'état d'un joint à lèvres énergisées à l'état libre ;
- la figure 4 le représente, alors qu'il est sous pression et
- les figures 5 et 6 sont des vues à plus grande échelle de la partie gauche seulement de la figure 2 entourée d'un cercle.

Le robinet à papillon suivant l'invention comprend un papillon 1 centré pouvant tourner sous l'action d'un arbre 5 de manœuvre, sa face en regard du siège (zone d'étanchéité) est une portée inclinée. Le robinet comprend, en outre, un corps 2 définissant un siège intérieur annulaire. Le papillon 1 est centré sur le corps 2. Le robinet comprend enfin un joint 3 d'un côté du corps 2, maintenu certes dans le logement défini entre le siège du corps 2 et la face du papillon 1 en regard du siège, par un anneau 4 anti-éjection ou dans une gorge du corps 2, mais libre de se mouvoir en son entier dans le logement. Le siège et la face convergent progressivement dans la direction axiale vers l'intérieur. Il est prévu une étanchéité 8 d'arbre 5 de manœuvre/corps 2 pour empêcher les fuites lorsque le robinet est en position ouverte.

Le joint 3 a un diamètre intérieur inférieur au diamètre extérieur maximal du papillon 1 et un diamètre extérieur supérieur au diamètre intérieur minimal du siège du corps 2.

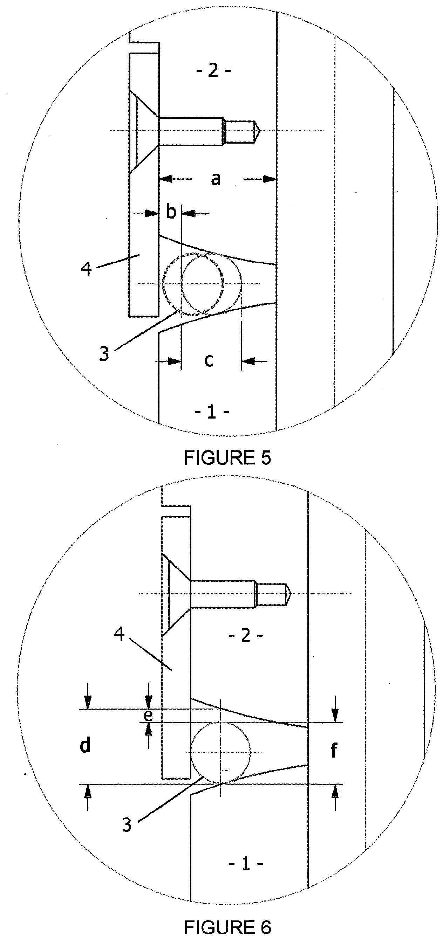

Comme le montre la figure 5, où le joint 3 est représenté en traits pleins dans la position où il se trouve quand la pression du fluide s'y applique et en tirets lorsqu'elle ne s'y applique pas, une dimension a axiale du logement du joint 3 autorise une liberté b axiale de déplacement du joint 3 équivalente à 1 à 50% de la dimension c axiale du joint 3 en un endroit du logement plus à gauche à la figure qu'un autre endroit plus vers l'intérieur.

Comme le montre la figure 6, où le joint 3 est représenté en une position possible, alors que la pression de fluide ne s'y applique pas, une dimension d radiale du logement du joint 3 autorise une liberté e radiale de déplacement du joint 3 équivalent à 1 à 50% de la dimension f radiale du joint 3.

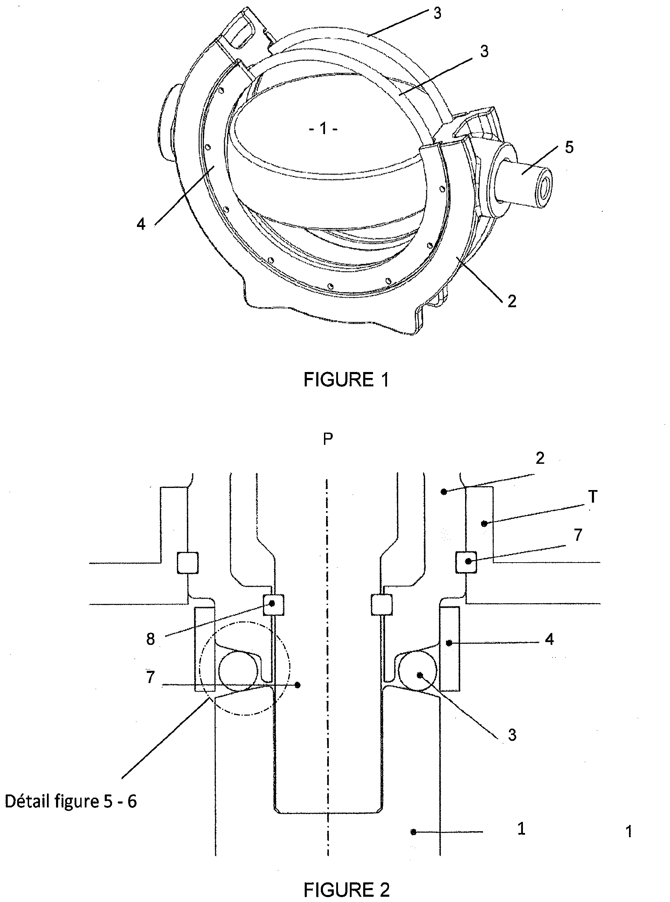

Dans sa variante à deux joints, le robinet est de symétrie par rapport au plan P médian (figure 2). Il a une étanchéité de fonction amont/aval (siège du corps/joint/face en regard du siège du papillon) axisymétrique par rapport à l'axe de la veine fluide ou de la tuyauterie. Il comporte une étanchéité 7 entre le corps 2 et la tuyauterie T pour empêcher les fuites vers l'extérieur et une étanchéité 8 entre l'arbre 5 et le corps 2 pour empêcher les fuites vers l'extérieur, lorsque le robinet est en position ouverte. La distance entre le plan médian du joint 3 en position tangente sur les sièges et la face en regard de l'anneau 4 est inférieure ou égale au diamètre de la section du joint 3.

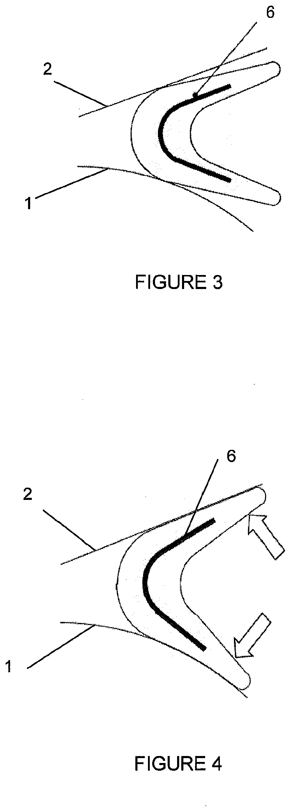

La figure 3 représente la position d'un joint à lèvres énergisées, alors que le papillon est en position ouverte. L'âme 6 élastique du joint n'applique pas le joint sur le corps 2 et sur le papillon 1. A la figure 4, les deux lèvres du joint sont appuyées respectivement sur le papillon 1 et sur le corps 2 par les forces de pression du fluide, qui agissent à l'encontre de la force de rappel de l'âme 6 élastique.

## Revendications

1. Robinet comprenant :
- un corps (2) définissant, par un siège intérieur annulaire, un intérieur formant un passage ayant une direction axiale,
- un papillon (1) centré, monté tournant dans l'intérieur du corps (2) d'une position ouverte dégageant le passage à une position fermée l'obturant, le plan médian (P) du papillon (1) en position fermée comprenant l'axe de rotation du papillon (1),
- un joint (3) d'étanchéité disposé dans un logement délimité par le siège et par une face, en regard du siège en la position fermée, du papillon, le siège et la face convergeant dans la direction axiale vers l'intérieur,
**caractérisé en ce que**, en la position fermée, le joint (3) est libre de se mouvoir en son entier dans le logement dans toutes les directions.

2. Robinet suivant la revendication 1, **caractérisé par** un moyen empêchant le joint (3) de sortir du logement par simple déplacement sans déformation.

3. Robinet suivant la revendication 2, **caractérisé en ce que** le moyen est un anneau anti-éjection (4).

4. Robinet suivant la revendication 2, **caractérisé en ce que** le moyen est une gorge circonférentielle intérieure du corps (2).

5. Robinet suivant l'une des revendications précédentes, **caractérisé en ce qu'**une dimension du logement dans la direction axiale est plus grande qu'une dimension du joint (3) dans la direction axiale de 1 à 50% de la dimension du joint dans la direction axiale.

6. Robinet suivant la revendication 5, **caractérisé en ce que** la dimension plus grande dans la direction axiale est à un endroit du logement plus loin de l'intérieur qu'un autre endroit du logement.

7. Robinet suivant l'une des revendications précédentes, **caractérisé en ce qu'**une dimension du logement dans une direction radiale, perpendiculaire à la direction axiale, est plus grande qu'une dimension du joint (3) dans la direction radiale de 1 à 50% de la dimension du joint dans la direction radiale.

8. Robinet suivant la revendication 7, **caractérisé en ce que** la dimension plus grande dans la direction radiale est à un endroit du logement plus loin de l'intérieur qu'un autre endroit du logement.

9. Robinet suivant l'une des revendications précédentes, **caractérisé en ce que** le joint (3) est torique ou un joint à lèvres, de préférence énergisées par une âme (6) élastique.

10. Robinet suivant l'une des revendications précédentes, **caractérisé en ce qu'**il est équipé de deux joints (3) d'étanchéité, de part et d'autre du papillon en la position fermée.

## Patentansprüche

1. Absperrklappe, welche umfasst:
- einen Körper (2), der durch einen ringförmigen inneren Sitz ein Inneres definiert, das einen Durchlass bildet, der eine axiale Richtung aufweist,
- eine zentrierte Drosselklappe (1), die im Inneren des Körpers
(2) drehbar von einer geöffneten Position, die den Durchlass freigibt, zu einer geschlossenen Position, die ihn verschließt, gelagert ist, wobei die Mittelebene (P) der Drosselklappe (1) in der geschlossenen Position die Drehachse der Drosselklappe (1) umfasst,
- eine Dichtung (3), die in einer Aufnahme angeordnet ist, welche von dem Sitz und von einer in der geschlossenen Position dem Sitz gegenüberliegenden Seite der Drosselklappe begrenzt wird, wobei der Sitz und die Seite in der axialen Richtung nach innen zusammenlaufen,
**dadurch gekennzeichnet, dass** in der geschlossenen Position die Dichtung (3) sich in ihrer Gesamtheit in der Aufnahme frei in allen Richtungen bewegen kann.

2. Absperrklappe nach Anspruch 1, **gekennzeichnet durch** ein Mittel, welches die Dichtung (3) daran hindert, sich durch einfache Verlagerung ohne Verformung aus der Aufnahme hinauszubewegen.

3. Absperrklappe nach Anspruch 2, **dadurch gekennzeichnet, dass** das Mittel ein Austrittsschutzring (4) ist.

4. Absperrklappe nach Anspruch 2, **dadurch gekennzeichnet, dass** das Mittel eine innere umlaufende Nut des Körpers (2) ist.

5. Absperrklappe nach einem der vorhergehenden Ansprüche, **dadurch gekennzeichnet, dass** eine Abmessung der Aufnahme in der axialen Richtung um 1 bis 50 % einer Abmessung der Dichtung (3) in der axialen Richtung größer als die Abmessung der Dichtung in der axialen Richtung ist.

6. Absperrklappe nach Anspruch 5, **dadurch gekennzeichnet, dass** sich die größere Abmessung in der axialen Richtung an einer Stelle der Aufnahme befindet, die weiter vom Inneren entfernt ist, als eine andere Stelle der Aufnahme.

7. Absperrklappe nach einem der vorhergehenden Ansprüche, **dadurch gekennzeichnet, dass** eine Abmessung der Aufnahme in einer radialen Richtung, senkrecht zur axialen Richtung, um 1 bis 50 % einer Abmessung der Dichtung (3) in der radialen Richtung größer als die Abmessung der Dichtung in der radialen Richtung ist.

8. Absperrklappe nach Anspruch 7, **dadurch gekennzeichnet, dass** sich die größere Abmessung in der radialen Richtung an einer Stelle der Aufnahme befindet, die weiter vom Inneren entfernt ist, als eine andere Stelle der Aufnahme.

9. Absperrklappe nach einem der vorhergehenden Ansprüche, **dadurch gekennzeichnet, dass** die Dichtung (3) ein O-Ring oder eine Lippendichtung, vorzugsweise mit durch einen elastischen Kern (6) vorgespannten Lippen, ist.

10. Absperrklappe nach einem der vorhergehenden Ansprüche, **dadurch gekennzeichnet, dass** sie mit zwei Dichtungen (3) ausgestattet ist, in der geschlossenen Position beiderseits der Drosselklappe.

## Claims

1. Valve comprising:
- a body (2) defining, by means of an annular internal seat, an internal area forming a passage with an axial direction,
- a centred butterfly (1) mounted rotatable inside the body (2) from an open position revealing the passage to a closed position covering said passage, the median plane (P) of the butterfly (1) in the closed position comprising the rotation axis of the butterfly (1),
- a seal (3) arranged inside a housing which is delimited by the seat and by a face, opposite the seat in the closed position, of the butterfly, the seat and the face converging towards the inside in the axial direction,
**characterised in that**, in the closed position, the seal (3) is free to move in its entirety in all directions inside the housing.

2. Valve according to claim 1, **characterised by** a means of preventing the seal (3) leaving the housing simply by moving without being deformed.

3. Valve according to claim 2, **characterised in that** said means is an anti-ejection ring (4).

4. Valve according to claim 2, **characterised in that** said means is a circumferential groove inside the body (2).

5. Valve according to any one of the preceding claims, **characterised in that** a housing dimension in the axial direction is larger than a seal (3) dimension in the axial direction by between 1 and 50% of the seal dimension in the axial direction.

6. Valve according to claim 5, **characterised in that** the largest dimension in the axial direction is at a place on the housing that is furthest from the inside than another place on the housing.

7. Valve according to any one of the preceding claims, **characterised in that** a housing dimension in a radial direction perpendicular to the axial direction is larger than a seal (3) dimension in the radial direction by between 1 and 50% of the seal dimension in the radial direction.

8. Valve according to claim 7, **characterised in that** the largest dimension in the radial direction is at a place on the housing that is furthest from the inside than another place on the housing.

9. Valve according to any one of the preceding claims, **characterised in that** the seal (3) is an O-ring or lip seal, preferably energised by an elastic core (6) .

10. Valve according to any one of the preceding claims, **characterised in that** it is furnished with two seals (3) on either side of the butterfly in the closed position.
